# EUROPEAN PATENT APPLICATION

(11) **EP 3 425 545 A1**
(43) Date of publication of application: **09.01.2019**
(21) Application number: 17759554.3
(22) Date of filing: 06.02.2017
(51) Int. Cl.: G06F 21/41

(54) **AUTHENTICATION PROCESSING DEVICE AND AUTHENTICATION PROCESSING METHOD**

(30) Priority: 02.03.2016 JP 2016039950
(71) Applicant: Recruit Co., Ltd., Chuo-ku Tokyo 1040061 (JP)
(72) Inventor: YUMIBA, Hirotsugu, Tokyo 100-6640 (JP)
(74) Representative: EIP
(86) International application number: PCT/JP2017/004258
(87) International publication number: WO 2017/150083

(57) **Abstract**

A management burden on a user accompanying user authentication is reduced. A telephone number assigned to a user terminal 4 and a service ID for identifying a service to be subjected to user authentication are received; checking information is transmitted to the received telephone number; a response using the checking information is received from the user terminal 4; user authentication is performed on the user terminal 4 based on the received response; and when a user is confirmed as a legitimate user by the user authentication, shared user information stored in association with the telephone number is sent to a service provision server 3 corresponding to the received service ID.

## Description

### Cross-Reference to Related Application

The present application is based upon Japanese Patent Application No. 2016-039950, filed on March 2, 2016, the disclosure of which is incorporated herein by reference.

### Technical Field

The present invention relates to an authentication processing apparatus and an authentication processing method.

### Background Art

An information processing system performs user authentication when a user starts using the system or the like, from a viewpoint of ensuring system security and the like. In user authentication, in general, the user is requested to enter a user ID and a password, and when the entered user ID and password agree with a user ID and a password that have already been registered, the user is permitted to log in to the system.

Patent Literature 1 cited below discloses an online reservation system that manages a maximum number of users connecting to the Internet by time of day and prevents many users from making access at the same time. In this reservation system, when a user accesses a server or a router, user authentication is performed by requesting the user to enter a user ID and a password.

### Citation List

### Patent Literature

Patent Literature 1: Japanese Patent Laid-Open No. 2001-358767

### Summary of Invention

In general, different user IDs and passwords are set for different systems. For a password in particular, it is required to set information that is difficult for others to estimate. Accordingly, since a user needs to keep track of user ID and password information for each system the user uses, a management burden on the user accompanying user authentication grows as the number of systems the user uses increases.

The present invention is made to solve the above-described problem, and an object of the present invention is to provide an authentication processing apparatus and an authentication processing method that can reduce a management burden on a user accompanying user authentication.

An authentication processing apparatus that is an aspect of the present invention includes: means for accepting an entry of a telephone number assigned to a mobile terminal from the mobile terminal and receiving a message including the accepted telephone number and a service ID for identifying a service to be subjected to user authentication; means for transmitting checking information to the telephone number included in the received message; means for receiving a response using the checking information from the mobile terminal; means for performing user authentication on the mobile terminal based on the received response; and means for providing user information stored in association with the telephone number to a service provision source corresponding to the service ID when a user is confirmed as a legitimate user by the user authentication.

The checking information is unique information, a content of which varies each time an entry of the telephone number is accepted, and the means for performing user authentication may be configured to determine that the user is a legitimate user when the received response is a unique checking response using the unique information.

The checking information may be a URL (uniform resource locator), and the response using the checking information may be an access request sent from the mobile terminal by selecting the URL.

The checking information may be a number or a character string, and the response using the checking information may be a message sent from the mobile terminal by entering the number or character string.

The user information may be configured to include basic user information that can be used commonly by all of the services.

The user information may be configured to further include individual user information that is arbitrarily set for and used by each of the services, the individual user information is stored in association with the service ID, and the means for providing the user information to the service provision source may be configured to provide the user information including the individual user information stored in association with the received service ID.

An authentication processing method that is another aspect of the present invention includes: by a server apparatus, accepting an entry of a telephone number assigned to a mobile terminal from the mobile terminal and receiving a message including the accepted telephone number and a service ID for identifying a service to be subjected to user authentication; transmitting checking information to the telephone number included in the received message; receiving a response using the checking information from the mobile terminal; performing user authentication on the mobile terminal based on the received response; and providing user information stored in association with the telephone number to a service provision source corresponding to the service ID when a user is confirmed as a legitimate user by the user authentication.

### Advantageous Effect of Invention

According to the present disclosure, it is possible to reduce a management burden on a user accompanying user authentication.

### Brief Description of Drawings

[Figure 1] Figure 1 shows an architecture of an authentication processing system including an authentication processing server according to an embodiment.
[Figure 2] Figure 2 shows a configuration of the authentication processing server shown in Figure 1.
[Figure 3] Figure 3 shows a user authentication screen.
[Figure 4] Figure 4 is a sequence chart for explaining a procedure to be followed when user authentication is performed in the authentication processing system.

### Description of Embodiment

Hereinafter, an embodiment of the present invention will be described in detail with reference to drawings. Note that same elements are denoted by same reference signs, and an overlapping description will be omitted.

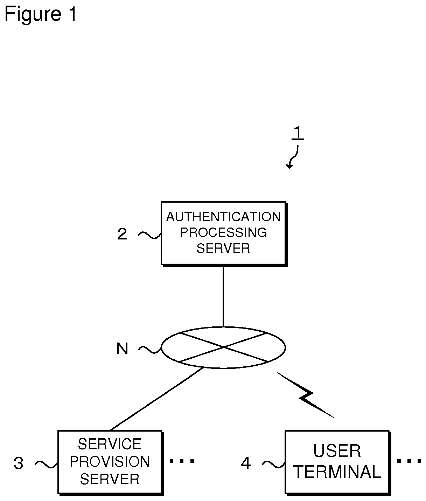

Figure 1 is a schematic diagram of an authentication processing system including an authentication processing server (authentication processing apparatus, server apparatus) according to an embodiment of the present invention. As shown in Figure 1, the authentication processing system 1 in the present embodiment includes the authentication processing server 2, one or more service provision servers 3, and one or more user terminals 4. The authentication processing server 2, the one or more service provision servers 3, and the one or more user terminals 4 are configured to be able to communicate with each other via a network N.

Each service provision server 3 is a server apparatus for providing a service to users. Examples of the service provided to users include a reservation acceptance service for trips, restaurants, and others, an electronic commerce service, a free mail service, an SNS (Social Networking Service), and the like.

Each user terminal 4 is a terminal device used by a user who receives a service provided. A smartphone is used for the one or more user terminals 4 to describe the present embodiment. However, the one or more user terminals 4 are not limited to a smartphone, but any general mobile terminal to which a telephone number can be assigned can be used for the one or more user terminals 4.

The authentication processing server 2 includes, for example, a computer with relatively high throughput. A predetermined server program is run on the computer, whereby server functionality is implemented. Here, the authentication processing server 2 does not necessarily include one computer, but may be configured with a plurality of computers distributed on the network N.

The network N includes a communication network through which the authentication processing server 2, the one or more service provision servers 3, and the one or more user terminals 4 can mutually send and receive information. The network N may be, for example, the Internet, a LAN, a leased circuit, a telephone circuit, an intra-firm network, a mobile communication network, Bluetooth(R), Wi-Fi (Wireless Fidelity), or any other communication circuit, or a combination of any of these, or the like, irrespective of wired or wireless.

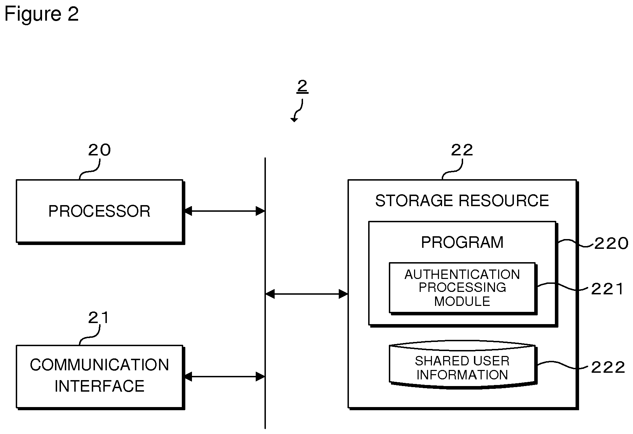

As shown in Figure 2, the authentication processing server 2 includes, for example, a processor 20, a communication interface 21, and a storage resource 22.

The processor 20 includes an arithmetic and logic unit for arithmetical operation, logical operation, bit operation, and other operation processing, and various registers. The processor 20 implements various functions, which will be described later, by executing a computer program 220 stored in the storage resource 22. Examples of the various registers include a program counter, a data register, a command register, a general register, and the like.

The communication interface 21 is a hardware module connected to the network N and configured to communicate with other terminals on the network N. The communication interface 21 is, for example, a modem such as an ISDN modem, an ADSL modem, a cable modem, an optical modem, or a soft modem.

The storage resource 22 is, for example, a logical device provided by a storage area of a physical device. The physical device is, for example, a disk drive or a computer-readable recording medium such as a semiconductor memory. The storage resource 22 may be built by mapping a plurality of physical devices to a single logical device, or may be built by mapping one physical device to a plurality of logical devices. The computer program 220 is stored in the storage resource 22.

The computer program 220 is a program for performing predetermined processing and includes a plurality of software modules, which are read and executed as appropriate while a main program of the authentication processing server 2 is running. Each of the software modules is a sub-program modularized to perform specific processing, and is created by using, for example, a procedure, a sub-routine, a method, a function, a data structure, and the like.

As an example, the computer program 220 includes an authentication processing module 221. A function to be implemented by executing the authentication processing module 221 will be described later.

In addition to the computer program 220, an operating system program used for the authentication processing server 2 to perform processing, a driver program, various data, and the like are stored in the storage resource 22. Examples of the driver program include a communication interface driver program for controlling the communication interface 21, and the like.

Examples of the various data include shared user information 222 available to each service, and the like. The shared user information 222 includes basic user information and individual user information. The basic user information includes data items that are commonly used by all services. The data items of the basic user information can include, for example, a telephone number item, a name item, an address item, a mail address item, and the like. The telephone number item is configured to store a telephone number that is assigned to each user terminal 4 used by a user as identification information for identifying the user.

The individual user information includes data items that are arbitrarily set for and used by each service. The individual user information is stored in association with a service ID that identifies a service. For the data items of the individual user information, for example, items can be configured to store credit card information, delivery destination information, bank account information, and the like, respectively.

Note that the structure of the database for storing the shared user information 222 and the combinations of the data items included in the shared user information 222 described above are only examples, and the structure of the database and the combinations of the data items can be changed as appropriate according to a system to operate.

Before a description is given of the function to be implemented by executing the authentication processing module 221 of the authentication processing server 2 shown in Figure 2, a description will be given of a user authentication screen to be displayed on a user terminal 4 that has sent a request to a service provision server 3 to start using a service that requires user authentication.

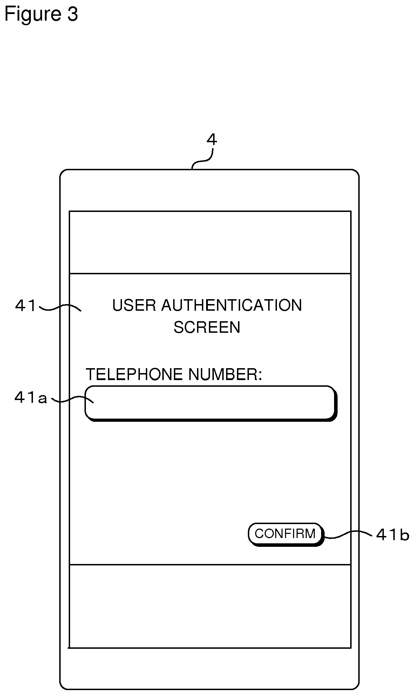

A user authentication screen 41 shown in Figure 3 is, for example, incorporated in the service provision server 3 as a user interface of a user authentication function that is provided by the service provision server 3 to the user terminal 4. The user authentication screen 41 has a telephone number entry field 41a and a confirmation button 41b.

The telephone number entry field 41a is an entry field in which a telephone number assigned to the user terminal 4 is entered. For an initial display, the telephone number entry field 41a may be configured to display the telephone number of the own terminal that is stored within the user terminal 4 (for example, in a memory or the like), or externally (for example, in a server or the like). The confirmation button 41b is a button, for example, by being tapped (selected) by a user, to start processing for sending the telephone number entered in the telephone number entry field 41a and a service ID for identifying the service requiring user authentication to the authentication processing server 2.

Note that the service ID can be configured, for example, when the confirmation button 41b is tapped, to be included in a request message to be sent to the authentication processing server 2.

The present invention is characterized in that entering of a user ID and a password is omitted, and instead a telephone number is entered, whereby user authentication can be performed. This characteristic can be implemented by utilizing a function of a telephone number as described below. First, a telephone number is a unique number assigned to each user terminal 4, and therefore can be regarded as identification information for identifying a user who owns a user terminal 4. Moreover, a telephone number is information for a user to remember relatively easily and therefore can reduce a burden on a user when the user is requested to enter a telephone number, in comparison with being requested to enter a user ID and a password.

On the other hand, if user authentication is performed only through entering of a telephone number, it may be possible that authentication succeeds even when a telephone number of a user is entered by another user using another terminal. Accordingly, in the present invention, unique checking information, which varies each time an entry of a telephone number is accepted, is issued to the user terminal 4 to which the telephone number entered by the user is assigned, a message for notifying the checking information is transmitted to the entered telephone number, and further a unique checking response, which is sent by using the checking information, is received from the user terminal 4, whereby legitimacy of the user terminal 4 is determined. The unique checking response can be generated, for example, by configuring the response to contain the unique checking information. Thus, when the unique checking response is received, it can be determined that a source terminal of the response is the legitimate user terminal 4 corresponding to the telephone number entered by the user.

For the checking information as described above, for example, a URL, a number, or a character string can be used. Specific procedures to be followed when legitimacy of the user terminal 4 is determined are illustrated below for each checking information. The procedures are implemented by executing the authentication processing module 221 shown in Figure 2.
(1) When the checking information is a URL: A text message for notifying a unique URL is sent to the telephone number. Thereafter, if an access request, which is sent when the user terminal 4 selects the notified URL, is received as the unique checking response, it is determined that a source terminal of the response is the legitimate user terminal 4.
   For a method of sending the text message to the telephone number, for example, a short message service (hereinafter, also referred to as "SMS") can be used.
(2) When the checking information is a number or a character string: A text message for notifying a unique number or a unique character string is sent to the telephone number. Thereafter, if a text message, which is sent to the authentication processing server 2 when the notified number or character string is entered by the user terminal 4, is received as the unique checking response, it is determined that a source terminal of the response is the legitimate user terminal 4.
(3) When the checking information is a number or a character string: An audio message for notifying a unique number or a unique character string is transmitted through telephone conversation or communication to the telephone number. Thereafter, if a text message, which is sent to the authentication processing server 2 when the notified number or character string is entered by the user terminal 4, is received as the unique checking response, it is determined that a source terminal of the response is the legitimate user terminal 4.
(4) When the checking information is a number or a character string: A text message for notifying a unique number or a unique character string is sent to the telephone number (it suffices that the number or character string can be displayed on a screen of the user terminal 4), and an audio message for notifying a method for making a checking response (for example, a key input operation or an audio input operation) is separately transmitted through telephone conversation or communication to the telephone number. Thereafter, if a text message or an audio message, which is sent to the authentication processing server 2 when the notified number or character string is entered by the user terminal 4 in accordance with the notified response method, is received as the unique checking response, it is determined that a source terminal of the response is the legitimate user terminal 4.

Summarizing the above (1) to (4), the function of the authentication processing module 221 is as follows. First, the authentication processing module 221 transmits a message for notifying checking information as described above to the telephone number entered in the telephone number entry field 41a.

Subsequently, when the authentication processing module 221 receives from the user terminal 4 a checking response that is sent by the user terminal 4 using the checking information, the authentication processing module 221 authenticates the user of the user terminal 4 as a legitimate user.

Moreover, when the user is authenticated as a legitimate user, the authentication processing module 221 sends the basic user information stored in association with the telephone number item of the shared user information 222 to the service provision server 3 corresponding to the service ID received from the user terminal 4. The service provision server 3 that has received the basic user information determines that user authentication has succeeded, and starts providing the service subjected to user authentication to the user terminal 4. Since the service provision server 3 thus can provide the service by using the basic user information, it is possible to omit work of entering the basic user information by the user, and thus to enhance user convenience.

Furthermore, if the individual user information is stored in the shared user information 222 in association with the service ID, the authentication processing module 221 sends the individual user information to the service provision server 3 in addition to the basic user information. Since the service provision server 3 thus can provide the service by using the individual user information, it is possible to omit work of entering the individual user information by the user, and thus to further enhance user convenience.

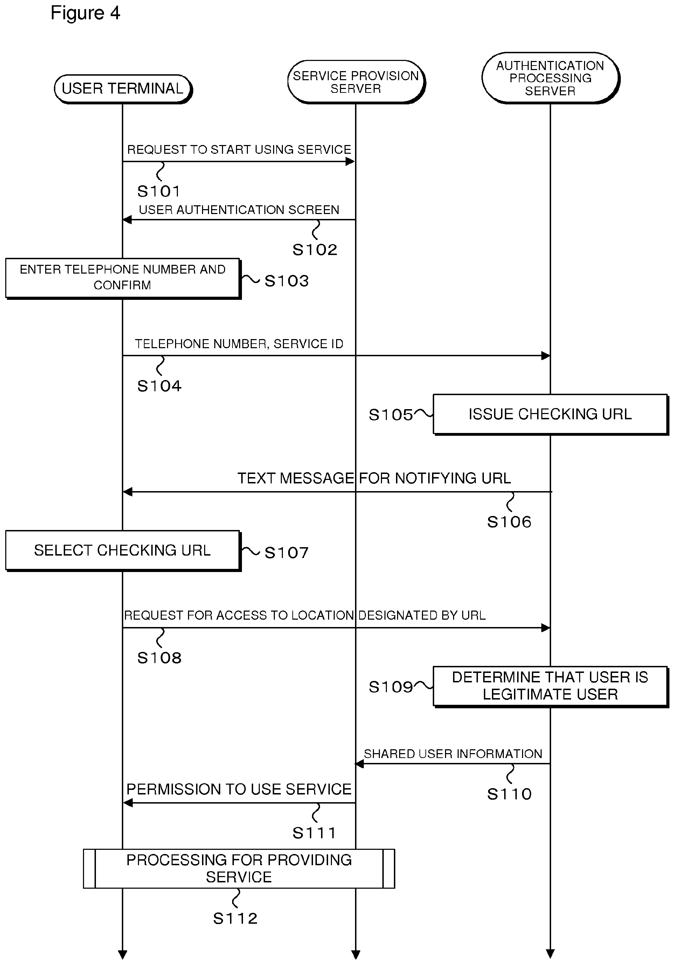

Referring to Figure 4, an example of a procedure to be followed when user authentication is performed in the authentication processing system. Here, a case where the checking information is a URL will be illustrated. If the checking information is a number or a character string, processing can be performed through a similar procedure as in the under-mentioned case of URL by changing under-mentioned processing at step S105 to step S109 to the respective processing described in the above-described procedures to be followed when legitimacy of the user terminal 4 is determined.

First, the user terminal 4 sends a request to the service provision server 3 to start using the service that requires user authentication (step S101).

Subsequently, the service provision server 3 causes the user authentication screen 41 (see Figure 3) to appear on a display of the user terminal 4 (step S102).

Subsequently, when the user of the user terminal 4 enters the telephone number of the user terminal 4 in the telephone number entry field 41a of the user authentication screen 41 and taps the confirmation button 41b (step S103), the user terminal 4 sends the telephone number entered in the telephone number entry field 41a and the service ID corresponding the service to be subjected to user authentication to the authentication processing server 2 (step S104).

Subsequently, the authentication processing module 221 of the authentication processing server 2 issues an URL as the checking information (step S105) and sends a text message for notifying the checking URL to the telephone number entered at the above-described step S103 (step S106).

Subsequently, when the user of the user terminal 4 selects the checking URL included in the text message (step S107), the user terminal 4 sends a request to access a location designated by the URL as the checking response (step S108).

Subsequently, the authentication processing module 221 of the authentication processing server 2 determines that the user of the terminal that has requested access at the above-described step S108 is the legitimate user of the user terminal 4 corresponding to the telephone number entered at the above-described step S103 (step S109).

Subsequently, the authentication processing module 221 of the authentication processing server 2 sends the shared user information stored in association with the telephone number sent at the above-described step S104 to the service provision server 3 corresponding to the service ID sent at the above-described step S104 (step S110).

Subsequently, the service provision server 3 permits the user terminal 4 that has sent the request to start using the service at the above-described step S101 to use the service (step S111).

Subsequently, various processing for providing the service is performed between the user terminal 4 and the service provision server 3, using the shared user information sent from the authentication processing server 2 at the above-described step S110 (step S112).

As described above, according to the authentication processing system 1 in the embodiment, the telephone number assigned to the user terminal 4 and the service ID of the service to be subjected to user authentication are received; a message for notifying checking information is transmitted to the received telephone number; a checking response, which is sent by the user terminal 4 using the checking information, is received; user authentication is performed on the user terminal 4 based on the received checking response; and when a legitimate user is confirmed, the shared user information associated with the telephone number can be provided to the service provision server 3 corresponding to the received service ID.

Accordingly, according to the authentication processing system 1 in the embodiment, it is possible to omit time and trouble to manage user ID and password information, which has conventionally been required at time of user authentication, and it is therefore possible to reduce a management burden on the user accompanying user authentication. Further, subsequent to authentication using the telephone number, the service can be provided by using the shared user information associated with the telephone number used in the authentication. Accordingly, it is possible to omit work of entering the shared user information by the user, and thus to enhance user convenience.

Moreover, according to the authentication processing system 1 in the embodiment, even if the user uses the service for the first time, the user can start using the service by entering the telephone number of the user terminal 4. Accordingly, it is possible to reduce a burden on the user who uses the service for the first time. On the other hand, the service provision side can acquire the shared user information and start providing the service by requesting the user who uses the service for the first time to enter the telephone number of the user terminal 4. Accordingly, it is possible to increase chances to provide the service to users who visit for the first time, and thus to effectively provide the service.

Furthermore, for the authentication processing server 2, usage by users increases, and participation in the system by the service provision side increases accordingly, whereby more shared user information can be accumulated. Accordingly, it is possible to effectively use the accumulated shared user information, for example, when another service such as a point program service is launched.

### [Modification Examples]

Note that the present invention is not limited to the above-described embodiment, but can be implemented in various forms without departing from the scope and spirit of the present invention. Accordingly, the above-described embodiment, in all aspects, is shown only for an illustrative purpose, and should not be construed as limiting the present invention. For example, each of the above-described processing (steps) can be performed in arbitrarily changed order, or in parallel, within the scope where no contradiction arises in the nature of the processing.

User authentication on a same user terminal 4 for a same service may be configured to be performed only for the first time and to be omitted for the second and subsequent times. When the present invention is applied, a connection state of each user terminal 4 to the network N may be either online or offline.

The program in the embodiment can be installed in or loaded on the computer by download via an optical disk such as CD-ROM, a magnetic disk, or various recording media (computer-readable media) such as a semiconductor memory, or via a communication network or the like.

### Industrial Applicability

The authentication processing apparatus and the authentication processing method according to the present invention are suitable to reduce a management burden on a user accompanying user authentication.

### Reference Signs List

1 Authentication processing system
2 Authentication processing server (authentication processing apparatus, server apparatus)
3 Service provision server
4 User terminal (mobile terminal)
20 Processor
21 Communication interface
22 Storage resource
41 User authentication screen
41a Telephone number entry field
41b Confirmation button
220 Computer program
221 Authentication processing module
222 Shared user information
N Network

## Claims

1. An authentication processing apparatus, comprising:
means for accepting an entry of a telephone number assigned to a mobile terminal from the mobile terminal and receiving a message including the accepted telephone number and a service ID for identifying a service to be subjected to user authentication;
means for transmitting checking information to the telephone number included in the received message;
means for receiving a response using the checking information from the mobile terminal;
means for performing user authentication on the mobile terminal based on the received response; and
means for providing user information stored in association with the telephone number to a service provision source corresponding to the service ID when a user is confirmed as a legitimate user by the user authentication.

2. The authentication processing apparatus according to claim 1,
wherein the checking information is unique information, a content of which varies each time an entry of the telephone number is accepted, and
the means for performing user authentication determines that the user is a legitimate user when the received response is a unique checking response using the unique information.

3. The authentication processing apparatus according to claim 1 or 2,
wherein the checking information is a URL (uniform resource locator), and
the response using the checking information is an access request sent from the mobile terminal by selecting the URL.

4. The authentication processing apparatus according to claim 1 or 2,
wherein the checking information is a number or a character string, and
the response using the checking information is a message sent from the mobile terminal by entering the number or character string.

5. The authentication processing apparatus according to any one of claims 1 to 4,
wherein the user information includes basic user information that can be used commonly by all of the services.

6. The authentication processing apparatus according to claim 5,
wherein the user information further includes individual user information that is arbitrarily set for and used by each of the services,
the individual user information is stored in association with the service ID, and
the means for providing the user information to the service provision source provides the user information including the individual user information stored in association with the received service ID.

7. An authentication processing method, comprising:
by a server apparatus,
accepting an entry of a telephone number assigned to a mobile terminal from the mobile terminal and receiving a message including the accepted telephone number and a service ID for identifying a service to be subjected to user authentication;
transmitting checking information to the telephone number included in the received message;
receiving a response using the checking information from the mobile terminal;
performing user authentication on the mobile terminal based on the received response; and
providing user information stored in association with the telephone number to a service provision source corresponding to the service ID when a user is confirmed as a legitimate user by the user authentication.
